# EUROPEAN PATENT APPLICATION

(11) **EP 2 009 876 A2**
(43) Date of publication of application: **31.12.2008**
(21) Application number: 08159134.9
(22) Date of filing: 26.06.2008
(51) Int. Cl.: H04L 29/08, G06K 9/62

(54) **Systems and method for publishing selectively altered sensor data in real time**

(30) Priority: 29.06.2007 US 771029
(71) Applicant: Honeywell International Inc., Morristown NJ 07960 (US)
(72) Inventor: Hart, Brett D. c/o Honeywell Internation Inc., Morristown, NJ 07962-2245 (US); Martinez, Steven D., Albuquerque NM 87113 (US); Rundquist, Ronald R., Albuquerque NM 87113 (US)
(74) Representative: Buckley, Guy Julian

(57) **Abstract**

Systems and methods are provided for publishing selectively altered sensor data. One system (100) includes a plurality of sensors (110,1110) coupled to a processor (120). The sensors (1110) are configured to generate data, and the processor is configured to fuse and publish a portion of the data from each of the plurality of sensors in a fused version of the data. Another system includes a sensor coupled to a processor. The sensor is configured to generate data and the processor is configured to modify the data to create a plurality of modified versions of the data. A method includes receiving data from at least one sensor, altering the data to create an altered version of the data, and publishing the altered version of the data in real time.

## Description

### FIELD OF THE INVENTION

The present invention generally relates to sensors, and more particularly relates to systems and methods for publishing selectively altered sensor data in real time.

### BACKGROUND OF THE INVENTION

Many events are recorded using one or more sensors (e.g., video camera, audio recorder, thermometer, infrared camera, etc.); however, each sensor has a limitation of some sort that may prevent a particular sensor from recording all of the event data one or more users may desire to obtain. For example, a typical video camera is limited to visual and sound recordings of particular scenes of the event, and is also limited to a particular field of view. If a user desires to record the temperature of various items within the scene or a second angle/view of the scene, the user generally employs, for example, a separate infrared camera to determine the various temperatures and a separate video camera to view the other angles/views. After recording, the data from the various cameras may be modified and/or fused, but this occurs some time in the future. Specifically, the user has to wait for a certain amount of time before the user is able to view the event with the modified and/or fused data. That is, the user is unable to view the fused and/or modified data of the event in real-time.

Accordingly, it is desirable to provide systems and methods for publishing modified and/or fused versions of data from one or more sensors that would enable a subscriber to selectively alter and review the data in real time. Furthermore, other desirable features and characteristics of the present invention will become apparent from the subsequent detailed description of the invention and the appended claims, taken in conjunction with the accompanying drawings and this background of the invention.

### BRIEF SUMMARY OF THE INVENTION

Systems are provided for publishing selectively fused and/or modified sensor data. One system comprises a plurality of sensors each configured to generate data, and a processor coupled to the plurality of sensors. The processor is configured to receive the data from at least two sensors of the plurality of sensors, fuse at least a portion of the data from the at least two of sensors to create a fused version of the data, and publish the fused version of the data.

Another system comprises a sensor configured to generate data, and a processor coupled to the sensor. The processor is configured to receive the data, modify the data to create a plurality of modified versions of the data, and publish each modified version of the data.

Methods for publishing selectively altered sensor data in real time are also provided. One method comprises the steps of receiving data from a sensor and altering the data to create an altered version of the data. The method also comprises the step of publishing the altered version of the data in real time.

### BRIEF DESCRIPTION OF THE DRAWINGS

The present invention will hereinafter be described in conjunction with the following drawing figures, wherein like numerals denote like elements, and

FIG. 1 is a block diagram of one exemplary embodiment of a system for publishing selectively altered sensor data in real time;

FIG. 2 is a block diagram of another exemplary embodiment of a system for publishing selectively altered sensor data in real time;

FIG. 3 is a diagram of an exemplary embodiment of a database comprised of a representative catalog having a plurality of channels publishing the selectively altered sensor data; and

FIG. 4 is a flow diagram of one exemplary embodiment of a method for publishing selectively altered sensor data in real time.

### DETAILED DESCRIPTION OF THE INVENTION

The following detailed description of the invention is merely exemplary in nature and is not intended to limit the invention or the application and uses of the invention. Furthermore, there is no intention to be bound by any theory presented in the preceding background of the invention or the following detailed description of the invention.

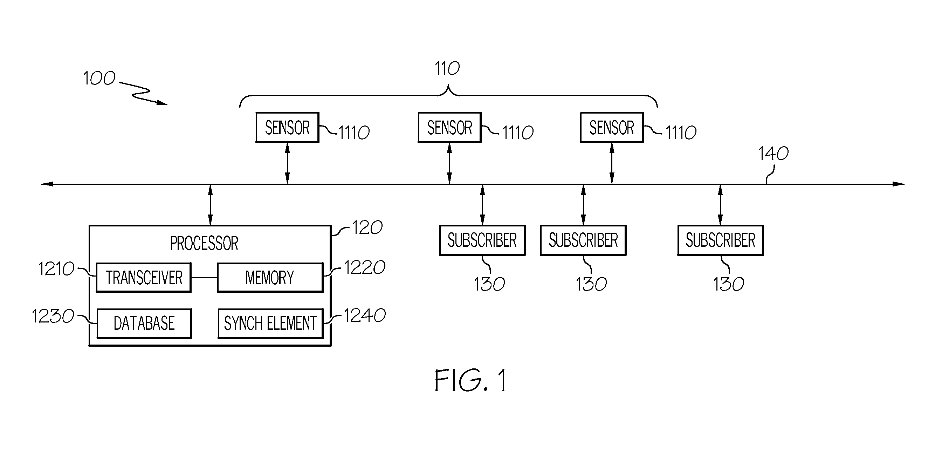

FIG. 1 is a block diagram of a system 100 for publishing selectively altered sensor data in real time. As illustrated in FIG. 1, system 100 comprises a sensor network 110, a processor 120, and one or more subscribers 130 coupled to one another via a communications network 140.

Sensor network 110 comprises one or more sensors 1110 configured to monitor and record physical conditions at diverse geographic locations. Commonly monitored and recorded conditions include, but are not limited to, visual images, temperature, motion, humidity, pressure, wind direction and speed, illumination intensity, vibration intensity, sound intensity, power-line voltage, chemical concentrations, pollutant levels, bodily functions, and the like. To accomplish is, each sensor 1110 comprises circuitry for generating signals (e.g., raw data) based on sensed physical effects and phenomena, and processes the raw data for output. Examples of sensors 1110 that may be used to implement sensor network 110 include, but are not limited to, thermal sensors (e.g., temperature sensors, heat sensors, infrared cameras, etc.), image sensors (e.g., video cameras, digital cameras, etc.), motion detectors, acoustic sensors (e.g., audio recorders, microphones, hydrophones, radar, etc.), light sensors, proximity sensors, ultrasound sensors, LADAR sensors, multi-spectral sensors, hyper-spectral sensors, chemical/biological sensors, explosive sensors, inertial sensors, barometric sensors, pressure sensors, position sensors (e.g., a global position system (GPS)), a wide area augmentation system (WAAS), telemetry sensor for detecting velocity, attitude, and/or absolute or relative position, and the like sensors.

In one exemplary embodiment, sensor network 110 comprises a plurality of sensors 1110 that are each substantially the same type of sensor. In another exemplary embodiment, sensor network 110 comprises a plurality of sensors 1110 and at least two sensors 1110 are substantially different from one another. For example, each sensor 1110 in sensor network 110 may be an image sensor, or one or more sensors in sensor network 110 may be image sensors and one or more other sensors may be thermal sensors. Accordingly, various embodiments of the invention contemplate that sensor network 110 may be comprised of any number of substantially similar and/or different sensor types.

One or more sensors 1110 of system 100 may be coupled to a mobile platform so that the sensor(s) 1110 can be moved from time to time. One or more sensors 1110 may also be coupled to a platform in motion or to a gimbal to assist in recording data and to provide various additional options for recording data.

The raw data recorded by sensors 1110 may be transmitted directly to one or more subscribers 130 and/or transmitted to processor 120 for alteration and/or storage. When transmitting the raw data, the raw data may be compressed by sensors 1110 prior to transmission and decompressed after receipt by either processor 120 and/or subscriber(s) 130. Alternatively, the raw data may not be compressed prior to transmission, but may be transmitted directly to processor 120 and/or subscriber(s) 130.

The raw data from one or more sensors 1110 may also be prioritized in accordance with quality of service (QoS) practices. That is, raw data generated by a particular sensor 1110 may be given transmission priority over raw data from other sensors 1110, raw data may be given transmission priority based on whether one or more particular subscribers 130 are receiving the raw data, or given transmission priority based on other designated criteria.

Processor 120, in one exemplary embodiment, comprises a transceiver 1210, memory 1220, a database 1230, and a synchronizing element 1240. Processor 120 is configured to receive, wired or wirelessly via transceiver 1210, the raw data from one or more of sensors 1110. Processor 120 is also configured to modify (e.g., in real time) at least a portion of the raw data according to the particular desires of the subscriber(s) 130. Processor 120 then stores the raw data and/or modified versions of the raw data in memory 1220. For example, in embodiments where at least one sensor 1110 is an image sensor, processor 120 may be configured to receive raw video data from one or more sensors 1110 and modify the visual spectrum, contrast, stabilization, color, distortion, field of view, and/or resolution of the raw video data to create a modified version of the video data. Furthermore, processor 120 may be configured to further process the raw video data to create a plurality of different modified versions of the video data.

In another exemplary embodiment, processor 120 is further configured to receive raw data from a plurality of sensors 1110, fuse at least a portion of the raw data from two or more sensors 1110, and store the raw data and/or the fused versions of data in memory 1220. In fusing the portions of raw data or the raw data from the two or more sensors 1110, synchronizing element 1240 appropriately delays one or more of the raw data streams so that the various streams are coordinated in time. For example, in embodiments where a first sensor is an image sensor (e.g., a video camera) and a second sensor is an infrared sensor (e.g., an infrared camera), synchronizing element 1240 is configured to receive raw video data and raw thermal image data from the two sensors 1110 and fuse or combine these raw data streams to produce a thermal image fused with the video data. Here, for example, a video scan and a thermal scan of a parking area with both sensors 1110 are coordinated in time by synchronizing element 1240 so that the subscriber 130 is able to view visual and thermal images of the parking area to determine the make and model of recently parked motor vehicles, the make and model being determinable by the video data and the timing approximated by the thermal signature of the motor vehicles.

The subscriber 130 may also desire to only view the raw video or thermal images and/or one or more versions of the raw data after it has been modified similar to the various embodiments discussed above. Specifically, the subscriber 130 can select the raw data and/or various versions of the data having a modified visual spectrum, contrast, stabilization, color, distortion, field of view, and/or resolution. Furthermore, the subscriber 130 may desire to view a fused version of the raw data comprised of the video data and/or the thermal data. That is, the fused version of the data may be comprised of raw data from two or more sensors, modified versions of raw data from two or more sensors, or raw data from one sensor fused with a modified version of raw data from another sensor.

In another example where at least two sensors 1110 are video cameras recording data of two or more adjacent geographic areas, the raw data from each sensor 1110 may be fused such that they are coordinated in time so that one or more subscribers 130 are able to pan a wider geographic area comprised of the two or more geographic areas. For example, the subscriber(s) 130 would be able to follow an object in motion as the object moves between the two or more adjacent areas. Similarly, the two or more sensors 1110 may record the same area from different angles (e.g., a front angle and a side angle). Once the raw data from these sensors 1110 are fused, the coordinates of the area may provide a more complete situational environment for the area. In yet another example, the subscriber 130 may be able to view raw data, modified raw data, or fused data from one or more sensors 1110 at the same time in a split screen or picture-in-picture format.

The various raw data, modified version(s), and/or fused version(s) of data may be stored and cataloged in database 1230. Specifically, database 1230 may store modified versions of raw data from one or more sensors, fused versions of raw data from two or more sensors, modified versions of raw data from one or more sensors fused with raw data from one or more other sensors, and/or a modified version of raw data from one or more sensors fused with a modified version of raw data from one or more other sensors. Furthermore, the subscriber(s) 130 may obtain the raw data directly from the sensor 1110 via communication network 140 (discussed below).

The various versions of raw data, modified raw data, and fused data may be cataloged, searched, and retrieved using meta-data or ancillary data associated with the various versions of raw data, modified raw data, and fused data. The catalog containing the meta-data may be stored in database 1230 or a database located remotely from database 1230. That is, the meta-data may be located either in the same database as the various raw data, modified versions, and/or fused versions of data. Moreover, the meta-data may comprise information pertaining to the location where the various raw data, modified versions, and/or fused versions are stored to aid in the search or retrieval of desired data.

Processor 120 is also configured to publish the various modified and/or fused (collectively "altered") versions of the data, as well as the raw data, so that one or more subscribers 130 may selectively choose to view the one or more versions of the altered data and/or raw data. Specifically, the modified versions of data, fused versions of raw data, and/or raw data are stored in database 1230 and/or are published (i.e., made available) to one or more subscribers 130 in real time.

Each subscriber 130 in system 100 has access to the data stored in database 1230 and/or is capable of receiving data directly from one or more sensors 1110. Subscribers 130 may be a human interfacing with system 100 via a computing device (e.g., a computer, a personal digital assistant, a Palm^{®} Pilot, a BlackBerry^{®}, a television, a radio, or the like devices). In this embodiment, each subscriber 130 accesses the data stored in database 1230 or being recorded by one or more sensors 1110 via the computing device.

In other embodiments, at least one subscriber 130 may be an automated agent capable of retrieving stored raw data, modified versions of raw data, and/or fused versions of data. That is, the agent subscriber 130 may automatically locate and retrieve data so that the data may be modified and/or fused with other data. Moreover, the agent subscriber 130 may also be capable of automatically initiating the modification and/or fusion based on pre-determined criteria or conditions.

Each subscriber 130 is also able to selectively alter any published version of data and/or raw data to create new versions tailored to the desires of the subscriber 130. Specifically, each subscriber 130 is able to specify how the raw data, modified versions of raw data, and/or fused versions of raw data may be further modified and/or fused. These further modified and/or fused versions are also stored in database 1230 and may be selectively viewed by one or more additional subscribers 130.

Communication network 140 may be any hardware, software, and/or device capable of enabling each sensor 1110 of sensor network 110, processor 120, and one or more subscribers 130 to communicate with one another. That is, each entity coupled to communication network 140 is capable of communicating with any other entity coupled to communication network 140. In one exemplary embodiment, communication network 140 is a cross point switch. In another exemplary embodiment, communication network 140 is a system bus. In other embodiments, communication network 140 is a point-to-point device or other networking technology (e.g., an Ethernet).

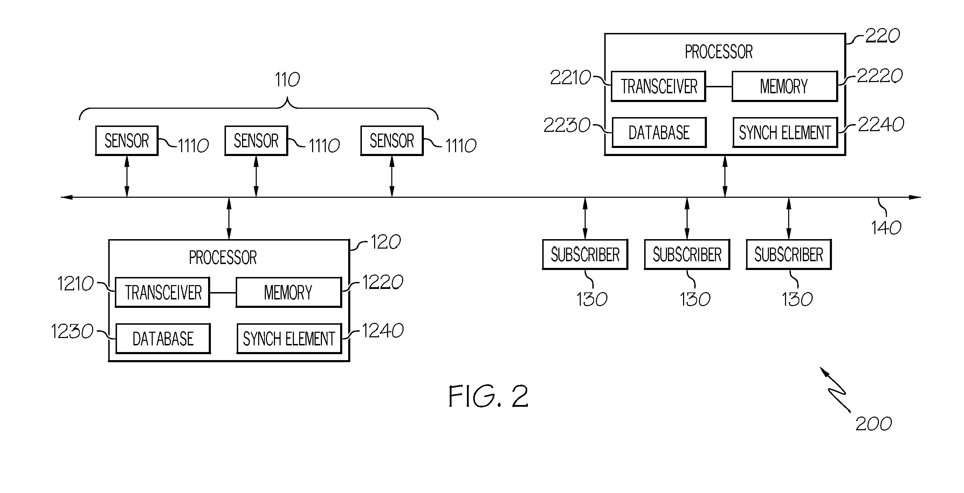

FIG. 2 is a block diagram of another exemplary embodiment of a system 200 for publishing selectively altered sensor data in real time. System 200 comprises sensor network 110, processor 120, and one or more subscribers 130 coupled to one another via communications network 140 similar to system 100 discussed above with reference to FIG. 1. In addition, system 200 further comprises a second processor 220 coupled to communication network 140. As such, processor 220 is in communication with sensor network 110, processor 120, and the one or more subscribers 130 via communications network 140.

Processor 220 comprises a transceiver 2210, memory 2220, a database 2230, and a synchronizing element 2240, and is configured similar to processor 120, transceiver 1210, memory 1220, database 1230, and synchronizing element 1240, respectively, discussed above with reference to FIG. 1. With this said, processors 120 and 220 may retrieve and further modify and/or fuse any version of data or raw data stored in the other processor. Furthermore, processors 120 and 220 may retrieve and fuse any version of raw data stored in the other processor 120 with any version of data or raw data stored in itself or in the other processor.

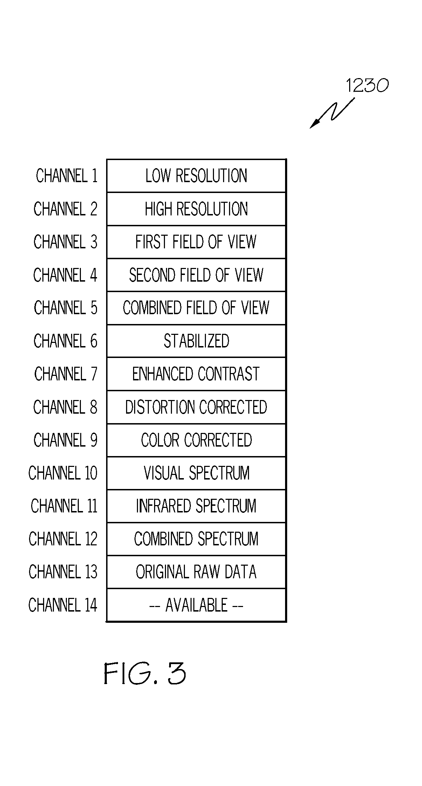

FIG. 3 is a diagram of an exemplary embodiment of database 1230 comprised of a representative catalog having a plurality of channels for publishing the selectively altered sensor data. Although the discussion below is made with respect to video data, database 1230 is not limited to storing video data and/or the various examples specifically discussed. Specifically, database 1230 may include options for various types of modified, fused, and/or raw data from various types of sensors.

The catalog, as shown in FIG. 3, publishes various versions of the data in 13 channels; however, the catalog is not limited to 13 channels. That is, various embodiments of the invention contemplate that the catalog may provide a fewer number or a greater number of channels providing one or more versions of modified and/or fused data. Subscribers 130 view the published versions of data in the catalog using, for example, a television remote control, a key stroke or mouse input in a computing device, audio inputs, or the like selection techniques.

As illustrated, channels 1 and 2 enable subscriber(s) 130 to view stored raw video data at different resolutions (e.g., low resolution and high resolution images, respectively). Similarly, channels 3 and 4 enable subscriber(s) 130 to view different portions (e.g., fields of view) of the same raw video data. For example, channel 3 may be used to view the horizon of a particular landscape while channel 4 is used to view the landscape below the horizon, as recorded by the same sensor.

Channel 5 may be used to view, for example, the horizon shown on channel 3 fused with the horizon as recorded by a different sensor remotely located from the sensor that recorded the data on channel 3. Specifically, processor 120 having received the raw video data from the two different sensors, fuses the portions of the video data illustrating the respective horizons of both images to create a fused version of video data showing both horizons in parallel with one another.

Channel 6 enables subscriber 130 to view video data after the raw video data has been stabilized, whereas channel 7 enables subscriber 130 to view the video data with enhanced contrast. Should subscriber 130 desire to view the video data with distortion or color correction, channels 8 and 9, respectively, enable subscriber 130 to do such.

Channels 10 and 11 provide subscriber 130 the ability to view a landscape that was recorded using different spectrums (e.g., visual spectrum and infrared spectrum, respectively). For example, one or more sensors 1110 may record the visual spectrum of the landscape and one or more sensors 1110 may record the infrared spectrum of the same or substantially the same landscape. Should subscriber 130 desire to view the landscape with a fused visual and infrared spectrum, channel 12 enables subscriber 130 to do such. The fused spectrum may comprise either the raw data from both sensors fused with one another, the raw data of one sensor fused with modified versions of data from another sensor, or modified versions of data from both sensors fused with one another.

Database 1230 also allows subscriber 130 to view the raw data from one or more sensors 1110. Furthermore, database 1230 provides one or more "available" channels (e.g., channel 14) for further modifying/combining the raw, modified, or fused versions of the data published on one or more of channels 1 through 13. Specifically, a particular subscriber 130 may desire to create a new modification and/or combination of existing raw, modified, and/or fused versions of data. To accomplish this, subscriber 130 specifies the information/characteristics that subscriber 130 desires to view, which commands processor 120 to determine which resource(s) are needed to construct the desired view. Once the resource(s) are determined, processor 120 generates the desired view based on the specified information/characteristics specified by subscriber 130.

In one embodiment, each new modification and/or combination is published on a channel of database 1230 for global access by one or more subscribers 130. In other embodiments, access to one or more channels may be restricted to a subset of subscribers of subscriber network 130, which restriction may be based on any number of pre-determined criteria (e.g., sensitivity of the data, classification of the subscriber, etc.).

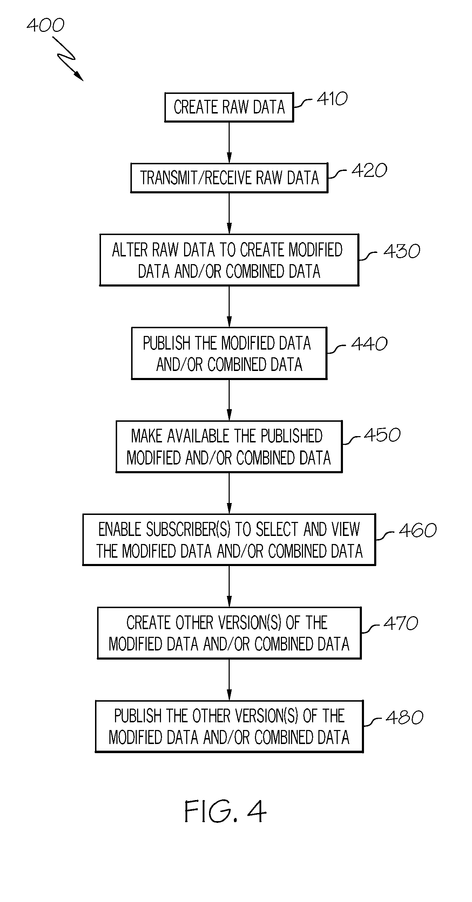

FIG. 4 is a flow diagram of one exemplary embodiment of a method 400 for publishing selectively modified and/or fused sensor data in real time. Method 400 begins by one or more sensors (e.g., sensors 1110) creating raw data based on sensed physical effects and phenomena (step 410). The raw data from sensor(s) 1110 is then transmitted to, and received by, a processor (e.g., processor 120) (step 420).

Processor 120 alters the raw data to create modified and/or fused versions of data (step 430). Modified versions of data comprises raw data that has had one or more of its characteristics (color, sound, resolution, distortion, spectrum, stability, field of view, contrast, etc.) changed. Fused versions of data comprises at least a portion of the raw data from two or more sensors fused with one another, at least a portion of the raw data from one sensor fused with modified versions of data from another sensor, or at least a portion of modified versions of data from two or more sensors fused with one another.

Once the modified versions of data and/or fused versions of data has been created, it is published in a catalog (e.g., the catalog) stored in a database (e.g., database 1230) based on the characteristics of the modified versions of data and/or fused versions of data (step 440). The published modified versions of data and/or fused versions of data are made available to a subscriber network (e.g., subscriber network 130) (step 450) so that one or more subscribers (e.g., subscribers 130) are able to select and view the published versions of data for view (step 460). The data is also capable of being further modified and/or fused by subscribers 130 to create various other versions of the modified and/or fused versions of data (step 470), which may also be published in the catalog (step 480). The ability of a subscriber to view and/or further modify or fuse data may be restricted to a particular class of subscriber or based on pre-determined criteria as discussed above.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system (100) for publishing selectively fused sensor data, comprising:
a plurality of sensors (1110) each configured to generate data; and
a processor (120) coupled to the plurality of sensors, the processor configured to receive the data from at least two sensors of the plurality of sensors, fuse at least a portion of the data from the at least two of sensors to create a fused version of the data, and publish the fused version of the data.

2. The system of claim 1, wherein a first sensor of the plurality of sensors is one of a video camera, an infrared camera, a motion detector, and an audio recorder, and a second sensor of the plurality of sensors is one of a video camera, an infrared camera, a motion detector, and an audio recorder.

3. The system of claim 2, wherein the first sensor and the second sensor are substantially different types of sensors.

4. The system of claim 3, wherein the first sensor is a video camera configured to generate video data and the second sensor is an infrared camera configured to generate thermal data.

5. The system of claim 3, wherein the first sensor is a motion detector configured to generate motion data and the second sensor is an audio recorder configured to generate audio data.

6. The system of claim 1, further comprising a computing device configured to enable the at least one subscriber to selectively view each fused version of the data in real time.

7. A system (100) for publishing selectively modified sensor data, comprising:
a sensor (1110) configured to generate data; and
a processor (120) coupled to the sensor, the processor configured to receive the data, modify the data to create a plurality of modified versions of the data, and publish each modified version of the data.

8. The system of claim 7, wherein the sensor is a video camera configured to generate video data, and the processor is configured to modify at least one of a video spectrum, a contrast, a stabilization, a color, a distortion, a field of view, and a resolution of at least a portion of the video data to create the plurality of modified versions of the data.

9. A method (400) for publishing selectively altered sensor data, the method comprising the steps of:
Receiving (420) data from a sensor;
Altering (430) the data to create an altered version of the data; and
Publishing (440) the altered version of the data in real time.

10. The method of claim 9, wherein the receiving step comprises the step of receiving data from each of a plurality of sensors, and the altering step comprises the step of combining at least a portion of the data from at least two sensors of the plurality of sensors to create a fused version of the data.
